# EUROPEAN PATENT SPECIFICATION

(11) **EP 1 445 939 B1**
(45) Date of publication and mention of the grant of the patent: **06.05.2009**
(21) Application number: 04250261.7
(22) Date of filing: 20.01.2004
(51) Int. Cl.: H04N 1/32, H04N 1/44

(54) **Method and apparatus for reliable and secure facsimile communications, and program and computer-readable medium storing the program for reliable and secure facsimile communications**
Verfahren und Gerät zur zuverlässigen und gesicherten Faksimilekommunikation und Rechnerprogramm und Datenspeichermedium mit aufgezeichnetem Rechnerprogramm zur zuverlässigen und sicheren Faksimilekommunikation
Méthode et dispositif d'une communication de fac-similé fiable et sécurisé, et logiciel et médium de stockage de données stockant des moyens de logiciel pour une communication de fac-similé fiable et sécurisé

(30) Priority: 28.01.2003 JP 2003018722
(43) Date of publication of application: 11.08.2004
(73) Proprietor: Ricoh Company, Ltd., Tokyo 143-8555 (JP)
(72) Inventor: Takubo, Masashi, Tokyo 143-8555 (JP)
(74) Representative: Leeming, John Gerard

(56) References cited:
- EP-A- 0 782 049
- EP-A- 1 271 916
- US-A- 5 647 010
- US-A1- 2002 135 816
- US-B1- 6 204 929
- PATENT ABSTRACTS OF JAPAN vol. 0142, no. 83 (P-1063), 19 June 1990 (1990-06-19) & JP 2 083571 A (CANON INC), 23 March 1990 (1990-03-23)

## Description

This specification describes a method and apparatus for reliable and secure facsimile communications, and more particularly a method and apparatus for reliable and secure facsimile communications using a controlled backup memory. This specification also describes a program for executing the above-mentioned method with a computer and a computer-readable medium storing the program.

In recent years, a facsimile apparatus has been developed, such as disclosed in EP 1 271 916, which transfers received facsimile data to a PC (personal computer) connected thereto via a network so that a user can easily view the contents of the received facsimile data without the needs of reproducing the data. Such a facsimile apparatus needs to hold the data in a memory until it receives a print instruction or a transfer request from the PC. In this facsimile apparatus, if the data is stored only in the memory, it is possible that the stored data is lost when power fails or is shut down, for example.
In some facsimile apparatuses and multi-function apparatuses, a hard disk is installed to store a relatively large amount of data. In some of these apparatuses, the hard disk is also used as a backup memory for storing the received facsimile data to attempt to solve the above-mentioned problem.

As examples, Japanese Laid-Open Patent Application Publications, No. 1-229543 and No. 5-48648, describe apparatuses each of which employs a plurality of backup storing devices to attempt to prevent a loss of data due to a failure of the storing devices.

Further, some of'recent facsimile apparatuses form a multi-function apparatus capable of performing multiple functions including copying, printing, networking with PCs, data transmission, etc. In these apparatuses, each of the multiple functions performs series of data processing operations such as storing, printing, and editing, for example, typically with using a common hard disk. In these apparatuses, one problem associated with received facsimile data is that the received facsimile data is accessed before the execution of reproduction by a PC or a function other than the facsimile function which may change or deletes the contents of the received facsimile data before a user view the data. Therefore, it is preferable that the received facsimile data is not accessed by a PC or a function other than the facsimile function before the execution of reproducing the received facsimile data. As one attempt to solve this problem, in some facsimile apparatuses, the received facsimile data stored in a memory exclusively accessible by the facsimile function is also stored in a hard disk accessible from a PC over a network or a function other than the facsimile function.

However, there is a confidential information handling in the facsimile procedure, in which the information is printed only when a pass code is entered. A careful consideration of handling the confidential information needs to be taken to the above-mentioned facsimile apparatus which has a generally accessible hard disk to store the backup of the received facsimile data.

In one example, a novel facsimile apparatus which is coupled to a telephone line network and a local area network and is capable of assuring information confidentiality and increasing reliability of data storage includes a facsimile communications mechanism, a first storing mechanism, a second storing mechanism, a backup arranging mechanism, a determining mechanism, and a controlling mechanism. The facsimile communications mechanism is configured to perform a facsimile communications operation. The first storing mechanism is configured to store data and to be inaccessible through the local area network. The second storing mechanism is configured to store data and to be accessible through the local area network. The backup arranging mechanism is configured to store received document data into the first storing mechanism and to store a copy of the received document data into the second storing mechanism. The determining mechanism is configured to determine whether the received document data is confidential. The controlling mechanism is configured to cause the backup arranging mechanism to cancel storing a copy of the received document data into the second storing mechanism when the received document data is determined as confidential by the determining mechanism.'

Further, to achieve the above-mentioned object and other objects, in one example, a novel facsimile apparatus which is coupled to a telephone line network and a local area network and is capable of assuring information confidentiality and increasing reliability of data storage includes a facsimile communications mechanism, a first storing mechanism, a second storing mechanism, a backup arranging mechanism, a determining mechanism, and a controlling mechanism. The facsimile communications mechanism is configured to perform a facsimile communications operation. The first storing mechanism is configured to store data and to be inaccessible through the local area network. The second storing mechanism is configured to store data and to be accessible through the local area network. The backup arranging mechanism is configured to store received document data into the first storing mechanism and to store a copy of the received document data into the second storing mechanism. The determining mechanism is configured to determine whether the received document data stored in the second storing mechanism is confidential upon a receipt of a data transmission request for transmitting the received document data stored in the second storing mechanism from an external terminal through the local area network. The controlling mechanism is configured to refuse the data transmission request from the external terminal through the local area network when the received document data is determined as confidential by the determining mechanism.

Further, to achieve the above-mentioned object and other objects, in one example, a novel facsimile apparatus which is coupled to a telephone line network and a local area network and is capable of assuring information confidentiality and increasing reliability of data storage includes a facsimile communications mechanism, a web server mechanism, a first storing mechanism, a second storing mechanism, a backup arranging mechanism, a determining mechanism, and a controlling mechanism. The facsimile communications mechanism is configured to perform a facsimile communications operation. The web server mechanism is configured to allow a web browser to show received document data. The first storing mechanism is configured to store data and to be inaccessible through the local area network. The second storing mechanism is configured to store data and to be accessible through the local area network. The backup arranging mechanism is configured to store received document data into the first storing mechanism and to store a copy of the received document data into the second storing mechanism. The determining mechanism is configured to determine whether the received document data stored in the second storing mechanism is confidential upon a receipt of a data transmission request for transmitting the received document data stored in the second storing mechanism from a web browser through the local area network. The controlling mechanism is configured to refuse the data transmission request from the web browser through the local area network when the received document data is determined as confidential by the determining mechanism.

Further, to achieve the above-mentioned object and other objects, in one example, a novel communications method which is coupled to a telephone line network and a local area network and is capable of assuring information confidentiality and increasing reliability of data storage includes the steps of performing, determining, storing, and copying. The performing step performs a facsimile communications operation. The determining step determines whether the received document data is confidential. The storing step stores received document data into a first memory inaccessible through the local area network. The copying step copies the received document data into a second memory accessible through the local area network when the received document data is determined as not confidential by the determining step. In this method, the copying step is cancelled when the received document data is determined as confidential by the determining step.

Further, to achieve the above-mentioned object and other objects, in one example, a novel computer readable data recording medium storing a program which is executed by a computer to perform operations according to a communications method for a facsimile apparatus coupled to a telephone line network and a local area network includes the steps of performing, storing, copying, determining, and refusing. The performing step performs a facsimile communications operation. The storing step stores received document data into a first memory inaccessible through the local area network. The copying step copies the received document data into a second memory accessible through the local area network. The determining step determines whether the received document data stored in the second memory is confidential upon a receipt of a data transmission request for transmitting the received document data stored in the second memory from a web browser through the local area network. The refusing step refuses the data transmission request from the web browser through the local area network when the received document data is determined as confidential by the determining step.

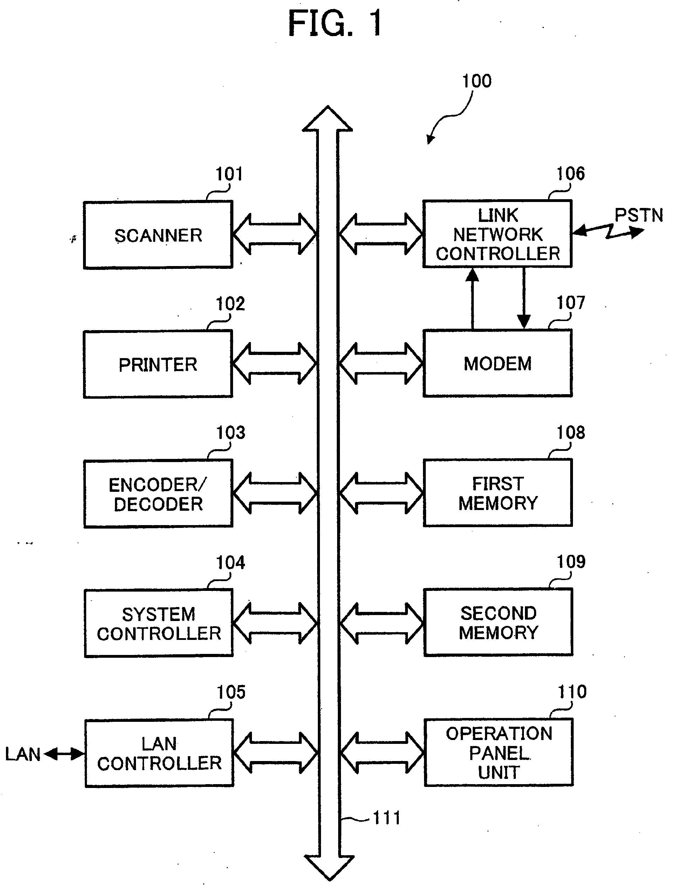

A more complete appreciation of the disclosure and many of the attendant advantages thereof will be readily obtained as the same becomes better understood by reference to the following detailed description when considered in connection with the accompanying drawings, wherein:
Fig. 1 is a schematic block diagram of a facsimile apparatus according an exemplary embodiment of the present invention;
FIG. 2 is a flowchart showing an exemplary data receiving operation performed by the facsimile apparatus of FIG. 1;
FIG. 3 is a flowchart showing an exemplary operation performed by the facsimile apparatus of FIG. 1 for transmitting received facsimile data to a personal computer;
FIG. 4 is a flowchart showing an exemplary operation performed by the facsimile apparatus of FIG. 1 for transmitting received facsimile data to a web browser; and
FIG. 5 is a schematic block diagram of an exemplary structure of a control system performing a software program which executes a control procedure of the facsimile apparatus of FIG. 1.
In describing preferred embodiments illustrated in the drawings, specific terminology is employed for the sake of clarity. Referring now to the drawings, wherein like reference numerals designate identical or corresponding parts throughout the several views, particularly to FIG. 1, a facsimile apparatus 100 as one example of an image forming apparatus according to an exemplary embodiment of the present invention is explained. As illustrated in FIG. 1, the facsimile apparatus 100 includes a scanner 101, a printer 102, an encoder and decoder 103, a system controller 104, a LAN (local area network) controller 105, a line network controller 106, a modem 107, a first memory 108, a second memory 109, an operation panel unit 110, and a system bus 111.

The scanner 101 reads an original and output image information. The printer 102 prints image information. The encoder and decoder 103 performs encoding and decoding operations relative to image information. The system controller 104 controls operations of the facsimile apparatus 100. The LAN controller 105 controls transmission and receiving information to and from a local area network (LAN) to which the facsimile apparatus 100 is connected. The line network controller 106 controls transmission and receiving information to and from a public switched telephone network (PSTN) to which the facsimile apparatus 100 is connected. The modem 107 exchanges data with an external personal computer (PC) via the line network controller 106. The first memory 108 is a memory not accessible from outside the facsimile apparatus 100. The second memory 109 is a memory accessible from outside the facsimile apparatus 100, for example, from the external PC via the LAN controller 105. The operation panel unit 110 allows users to enter instructions and data which are processed inside the facsimile apparatus 100 and/or are indicated on a display included in the operation panel unit 110. The facsimile apparatus 100 has a data backup function in which the facsimile apparatus 100 checks the contents of the first and second memories 108 and 109 at a power-on time and, when one of the first and second memories 108 and 109 loses its contents, duplicates the contents of the memory holding its contents to the memory which loses the contents.

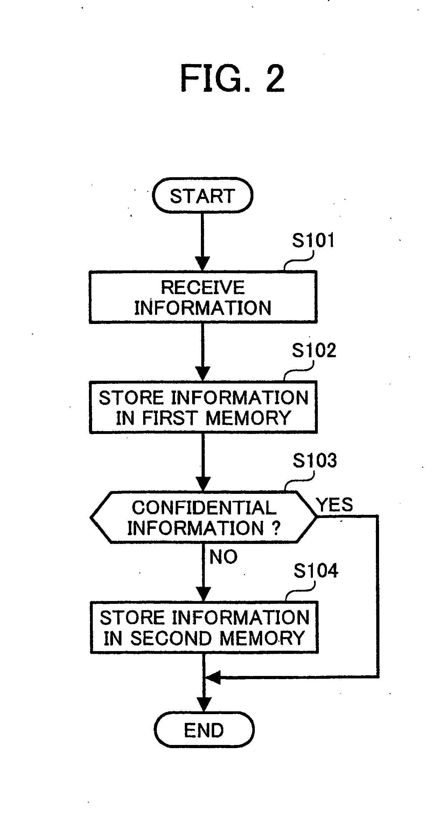

Referring to FIG. 2, an exemplary procedure of a document'storing operation for storing a received document performed by the facsimile apparatus 100 is explained. In Step S101, the facsimile apparatus 100 receives a facsimile document from a PC (not shown) through a telephone line. Upon a receipt of the facsimile document, the system controller 104 stores the received facsimile document into the first memory 108, in Step S102. Then, in Step S103, the system controller 104 determines whether the received facsimile document is confidential. When the received facsimile document is determined as not confidential and the determination result of Step S103 is NO, the system controller 104 stores the received facsimile document into the second memory 109, in Step S104. When the received facsimile document is determined as confidential and the determination result of Step S103 is YES, the process ends.

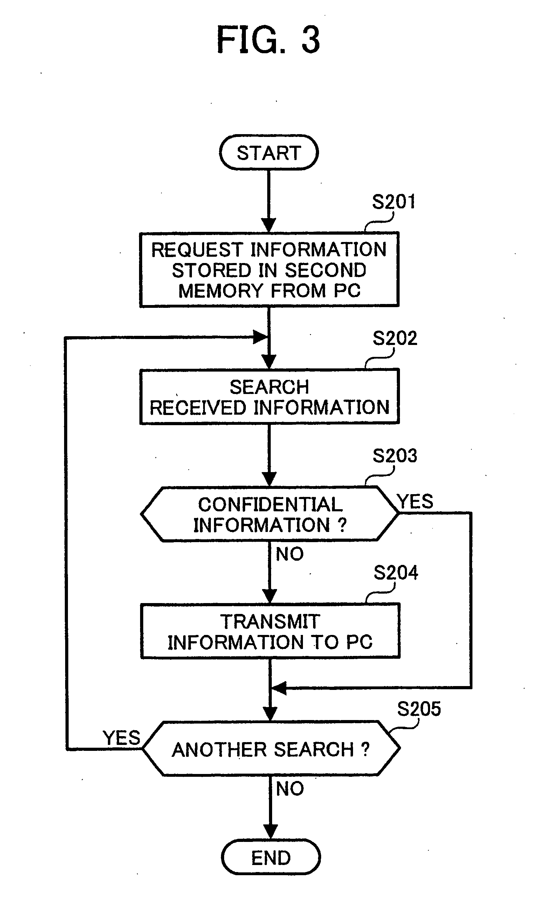

Referring to FIG. 3, an exemplary procedure of a document referring operation for referring to a received document performed by the facsimile apparatus 100 is explained. In Step S201, the facsimile apparatus 100 receives a request from a PC (not shown) through the LAN controller 105 for referring to a received facsimile document stored in the second memory 109. Upon a receipt of the request, the system controller 104 searches the received facsimile document stored in the second memory 109, in Step S202. Then, in Step S203, the system controller 104 determines whether the received facsimile document searched is confidential. When the received facsimile document searched is determined as not confidential and the determination result of Step S203 is NO, the system controller 104 transmits the received facsimile document searched to the PC via the LAN controller 105, in Step S204. Then, the process proceeds to Step S205 and the system controller 104 determines whether another received facsimile document to be searched exists. When another received facsimile document to be searched is determined as existing and the determination result of Step S205 is YES, the process returns to Step S202 to repeat the same procedure from the searching step. When another received facsimile document to be searched is determined as not existing and the determination result of Step S205 is NO, the process ends.

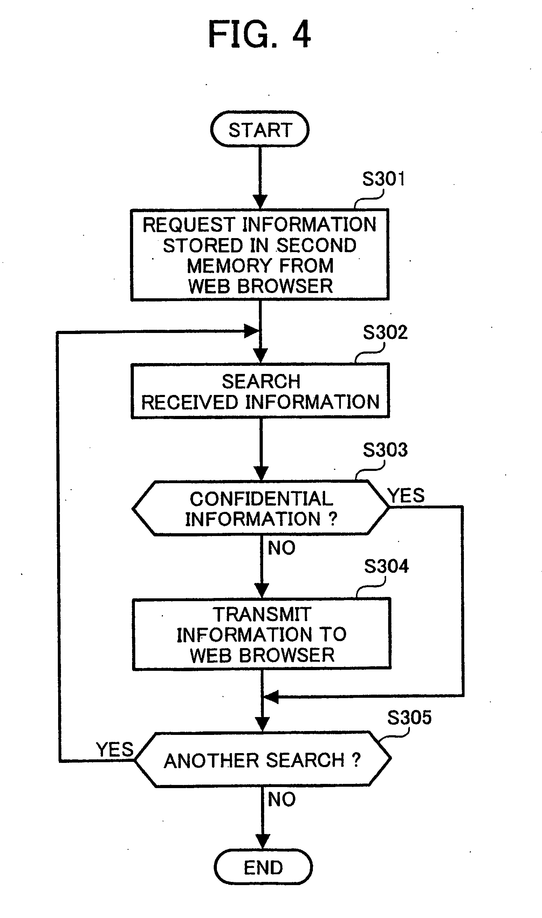

Referring to FIG. 4, an exemplary procedure of another document referring operation performed by the facsimile apparatus 100 is explained. In this case, the document referring operation is requested by a web browser. In Step S301, the facsimile apparatus 100 receives a request from a web browser (not shown) through the LAN controller 105 for referring to a received facsimile document stored in the second memory 109. Upon a receipt of the request, the system controller 104 searches the received facsimile document stored in the second memory 109, in Step S302. Then, in Step S303, the system controller 104 determines whether the received facsimile document searched is confidential. When the received facsimile document searched is determined as not confidential and the determination result of Step S303 is NO, the system controller 104 transmits the received facsimile document searched to the web browser via the LAN controller 105, in Step S304. Then, the process proceeds to Step S305 and the system controller 104 determines whether another received facsimile document to be searched exists. When another received facsimile document to be searched is determined as existing and the determination result of Step S305 is YES, the process returns to Step S302 to repeat the same procedure from the searching step. When another received facsimile document to be searched is determined as not existing and the determination result of Step S305 is NO, the process ends.

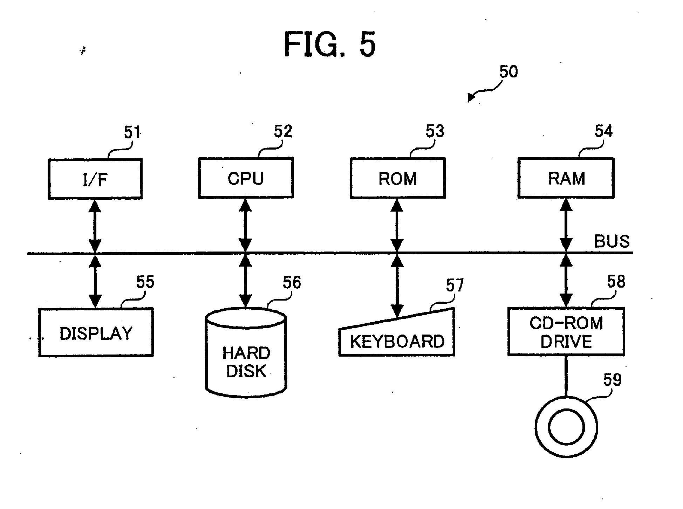

Referring to FIG. 5, an exemplary structure of a hardware system 50 executing a software program according to the control procedure performed by the image forming apparatus according to'the present invention. As shown in FIG. 5, the control system 50 includes an interface (I/F) 51, a CPU (central processing unit) 52, a ROM (read only memory) 53, a RAM (random access memory) 54, a display 55, a hard disk 56, a keyboard 57, and a CD-ROM drive 58. The control system 50 may be a general purpose personal computer. A software program executing the control procedure of the image forming apparatus according to the present invention is stored in a computer readable medium such as a CD-ROM 59, for example. Various control signals can be input to the control system 50 from an external apparatus via the interface 51, and the software program of the present invention is started automatically or with a user instruction through the keyboard 57. Then, in accordance with the software program, the CPU 52 executes various control operations associated with the control procedure of the image forming apparatus according to the present invention. During the program execution, the CPU 52 stores the processing results into the RAM 54 and the hard disk 56 and displays the information on the display 55 as needed. In this way, a control system for the image forming apparatus of the present invention may generally be formed without the needs of modifying the existing system by using a data recording medium storing a software program executing the control procedure of the image forming apparatus according to the present invention.
The above-described examples may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art. The examples may also be implemented by the preparation of application specific integrated circuits or by interconnecting an appropriate network of conventional component circuits, as will be readily apparent to those skilled in the art.
Numerous additional modifications and variations are possible in light of the above teachings. It is therefore to be understood that within the scope of the appended claims, the disclosure of this patent specification may be practiced otherwise than as specifically described herein.

## Claims

1. A facsimile apparatus (100) coupled to a telephone line network and a local area network, comprising:
communicating means (107) for performing a facsimile communications operation;
**characterized by** first storing means (108) inaccessible through the local area network for storing data;
second storing means (109) accessible through the local area network for storing data;
backup arranging means (104) for storing received document data into the first storing means (108) and storing a copy of the received document data into the second storing means (109);
determining means for determining whether the received document data is confidential; and
controlling means (104) for preventing the backup arranging means storing a copy of the received document data into the second storing means (109) when the received document data is determined as confidential by the determining means.

2. A facsimile apparatus (100) coupled to a telephone line network and a local area network, comprising:
communicating means (107) for performing a facsimile communications operation;
**characterized by** first storing means (108) inaccessible through the local area network for storing data;
second storing means (109) accessible through the local area network for storing data;
backup arranging means for storing received document data into the first storing means (108) and storing a copy of the received document data into the second storing means (109) ;
determining means (104) for determining whether the received document data stored in the second storing means (109) is confidential upon a receipt of a data transmission request for transmitting the received document data stored in the second storing means from an external terminal through the local area network; and
controlling means (104) for refusing the data transmission request from the external terminal through the local area network when the received document data is determined as confidential by the determining means.

3. A facsimile apparatus (100) according to claim 2, further comprising:
web server means for allowing a web browser to show received document data;
wherein said external terminal is a web browser.

4. A communications method for a facsimile apparatus (100) coupled to a telephone line network and a local area network, comprising the steps of:
performing a facsimile communications operation;
**characterized by** determining whether the received document data is confidential;
storing received document data into a first memory (108) inaccessible through the local area network; and
copying the received document data into a second memory (109) accessible through the local area network when the received document data is determined as not confidential by the determining step,
wherein the copying step is prevented when the received document data is determined as confidential by the determining step.

5. A communications method for a facsimile apparatus (100) coupled to a telephone line network and a local area network, comprising the steps of:
performing a facsimile communications operation;
**characterized by** storing received document data into a first memory (108) inaccessible through the local area network;
copying the received document data into a second memory (109) accessible through the local area network;
determining whether the received document data stored in the second memory (109) is confidential upon a receipt of a data transmission request for transmitting the received document data stored in the second memory from an external terminal through the local area network; and
refusing the data transmission request from the external terminal through the local area network when the received document data is determined as confidential by the determining step.

6. A communications method for a facsimile apparatus (100) according to claim 5, wherein said external terminal is a web browser.

7. A computer readable data recording medium storing program means that, when executed on a computer system, instruct the computer system to perform a method according to any one of claims 4 to 6.

## Patentansprüche

1. Telefaxgerät (100), das mit einem Telephonleitungsnetz und mit einem Nahbereichsnetz gekoppelt ist und umfasst:
Kommunikationsmittel (107), um eine Telefaxkommunikationsoperation auszuführen;
**gekennzeichnet durch** erste Überwachungsmittel (108), auf die über das Nahbereichsnetz nicht zugegriffen werden kann, um Daten zu speichern;
zweite Speichermittel (109), auf die über das Nahbereichsnetz zugegriffen werden kann, um Daten zu speichern;
Sicherungsveranlassungsmittel (104), um empfangene Dokumentdaten in den ersten Speichermitteln (108) zu speichern und um eine Kopie der empfangenen Dokumentdaten in den zweiten Speichermitteln (109) zu speichern;
Bestimmungsmittel, um zu bestimmen, ob die empfangenen Dokumentdaten vertraulich sind; und
Steuermittel (104), um zu verhindern, dass die Sicherungsveranlassungsmittel eine Kopie der empfangenen Dokumentdaten in den zweiten Speichermitteln (109) speichern, wenn die empfangenen Dokumentdaten **durch** die Bestimmungsmittel als vertraulich bestimmt werden.

2. Telefaxgerät (100), das mit einem Telephonleitungsnetz und mit einem Nahbereichsnetz gekoppelt ist und umfasst:
Kommunikationsmittel (107), um eine Telefaxkommunikationsoperation auszuführen;
**gekennzeichnet durch** erste Speichermittel (108), auf die über das Nahbereichsnetz nicht zugegriffen werden kann, um Daten zu speichern;
zweite Speichermittel (109), auf die über das Nahbereichsnetz zugegriffen werden kann, um Daten zu speichern;
Sicherungsveranlassungsmittel, um empfangene Dokumentdaten in den ersten Speichermitteln (108) zu speichern und um eine Kopie der empfangenen Dokumentdaten in den zweiten Speichermitteln (109) zu speichern;
Bestimmungsmittel (104), um zu bestimmen, ob die in den zweiten Speichermitteln (109) gespeicherten empfangenen Dokumentdaten vertraulich sind, wenn über das Nahbereichsnetz von einem externen Endgerät eine Datenübertragungsanforderung zum Übertragen der in den zweiten Speichermitteln gespeicherten empfangenen Dokumentdaten empfangen wird; und
Steuermittel (104), um die Datenübertragungsanforderung von dem externen Endgerät über das Nahbereichsnetz abzulehnen, wenn die empfangenen Dokumentdaten **durch** die Bestimmungsmittel als vertraulich bestimmt werden.

3. Telefaxgerät (100) nach Anspruch 2, das ferner umfasst:
Webserver-Mittel, um einem Webbrowser zu erlauben, die empfangenen Dokumentdaten anzuzeigen;
wobei das externe Endgerät ein Webbrowser ist.

4. Kommunikationsverfahren für ein Telefaxgerät (100), das mit einem Telephonleitungsnetz und einem Nahbereichsnetz gekoppelt ist, das die folgenden Schritte umfasst:
Ausführen einer Telefaxkommunikationsoperation;
**gekennzeichnet durch** das Bestimmen, ob die empfangenen Dokumentdaten vertraulich sind;
Speichern empfangener Dokumentdaten in einem ersten Speicher (108), auf den über das Nahbereichsnetz nicht zugegriffen werden kann; und
Kopieren der empfangenen Dokumentdaten in einen zweiten Speicher (109), auf den über das Nahbereichsnetz zugegriffen werden kann, wenn die empfangenen Dokumentdaten durch den Bestimmungsschritt als nicht vertraulich bestimmt werden,
wobei der Kopierschritt verhindert wird, wenn die empfangenen Dokumentdaten **durch** den Bestimmungsschritt als vertraulich bestimmt werden.

5. Kommunikationsverfahren für eine Telefaxgerät (100), die mit einem Telephonleitungsnetz und einem Nahbereichsnetz gekoppelt ist, das die folgenden Schritte umfasst:
Ausführen einer Telefaxkommunikationsoperation;
**gekennzeichnet durch** das Speichern empfangener Dokumentdaten in einem ersten Speicher (108), auf den über das Nahbereichsnetz nicht zugegriffen werden kann;
Kopieren der empfangenen Dokumentdaten in einem zweiten Speicher (109), auf den über das Nahbereichsnetz zugegriffen werden kann;
Bestimmen, ob die empfangenen Dokumentdaten, die in dem zweiten Speicher (109) gespeichert sind, vertraulich sind, wenn über das Nahbereichsnetz von einem externen Endgerät eine Datenübertragungsanforderung zum Übertragen der in dem zweiten Speicher gespeicherten empfangenen Dokumentdaten empfangen wird; und
Verweigern der Datenübertragungsanforderung von dem externen Endgerät über das lokale Netz, wenn die empfangenen Dokumentdaten **durch** den Bestimmungsschritt als vertraulich bestimmt werden.

6. Kommunikationsverfahren für ein Telefaxgerät (100) nach Anspruch 5, wobei das externe Endgerät ein Webbrowser ist.

7. Computerlesbares Datenaufzeichnungsmedium, das Programmmittel speichert, die dann, wenn sie auf einem Computersystem ausgeführt werden, das Computersystem anweisen, ein Verfahren nach einem der Ansprüche 4 bis 6 auszuführen.

## Revendications

1. Appareil de fac-similé (100) couplé à un réseau de lignes téléphoniques et à un réseau local, comportant :
un moyen de communication (107) pour effectuer une opération de communications de fac-similé ;
**caractérisé par** un premier moyen de stockage (108) inaccessible par le réseau local pour mémoriser des données ;
un second moyen de stockage (109) accessible par l'intermédiaire du réseau local pour mémoriser des données ;
un moyen d'agencement de sauvegarde (104) pour mémoriser des données de documents reçus dans le premier moyen de stockage (108) et pour stocker une copie des données de documents reçus dans le second moyen de stockage (109) ;
un moyen de détermination pour déterminer si les données de documents reçus sont confidentielles ; et
un moyen de contrôle (104) pour empêcher que le moyen d'agencement de sauvegarde mémorise une copie des données de documents reçus dans le second moyen de stockage (109) lorsque les données de documents reçus sont déterminées comme étant confidentielles par le moyen de détermination.

2. Appareil de fac-similé (100) couplé à un réseau de lignes téléphoniques et à un réseau local, comportant :
un moyen de communication (107) pour effectuer une opération de communications de fac-similé ;
**caractérisé par** un premier moyen de stockage (108) inaccessible par le réseau local pour mémoriser des données ;
un second moyen de stockage (109) accessible par le réseau local pour mémoriser des données ;
un moyen d'agencement de sauvegarde pour mémoriser des données de documents reçus dans le premier moyen de stockage (108) et mémoriser une copie des données de documents reçus dans le second moyen de stockage (109) ;
un moyen de détermination (104) pour déterminer si les données de documents reçus mémorisées dans le second moyen de stockage (109) sont confidentielles lors de la réception d'une requête de transmission de données pour transmettre les données de documents reçus mémorisées dans le second moyen de stockage depuis un terminal externe par l'intermédiaire du réseau local ; et
un moyen de contrôle (104) pour refuser la requête de transmission de données depuis le terminal externe par l'intermédiaire du réseau local lorsque les données de documents reçus sont déterminées comme étant confidentielles par le moyen de détermination.

3. Appareil de fac-similé (100) selon la revendication 2, comportant en outré :
un moyen de serveur Web pour autoriser un moteur de recherche à montrer les données de documents reçus ;
dans lequel ledit terminal externe est un moteur de recherche Web.

4. Procédé de communication pour un appareil de fac-similé (100) couplé à un réseau de lignes téléphoniques et à un réseau local, comportant les étapes consistant à :
effectuer une opération de communications de fac-similé ;
**caractérisé par** la détermination que les données de documents reçus sont confidentielles ;
la mémorisation des données de documents reçus dans une première mémoire (108) inaccessible par le réseau local ; et
la copie des données de documents reçus dans une seconde mémoire (109) accessible par le réseau local lorsque les données de documents reçus sont déterminées comme n'étant pas confidentielles par l'étape de détermination,
dans lequel l'étape de copie est empêchée lorsque les données de documents reçus sont déterminées comme étant confidentielles par l'étape de détermination.

5. Procédé de communication pour un appareil de fac-similé (100) couplé à un réseau de lignes téléphoniques et à un réseau local, comportant les étapes consistant à :
effectuer une opération de communications de fac-similé ;
**caractérisé par** le stockage des données de documents reçus dans une première mémoire (108) inaccessible par le réseau local ;
la copie des données de documents reçus dans une seconde mémoire (109) accessible par le réseau local ;
la détermination que les données de documents reçus mémorisées dans la seconde mémoire (109) sont confidentielles lors de la réception d'une requête de transmission de données pour transmettre les données de documents reçus mémorisées dans la seconde mémoire depuis un terminal externe par l'intermédiaire du réseau local ; et
le refus de la requête de transmission de données depuis le terminal externe par l'intermédiaire du réseau local lorsque les données de documents reçus sont déterminées comme étant confidentielles par l'étape de détermination.

6. Procédé de communication pour un appareil de fac-similé (100) selon la revendication 5, dans lequel ledit terminal externe est un moteur de recherche Web.

7. Support d'enregistrement de données pouvant être lu par un ordinateur mémorisant un moyen de programme qui, lors de son exécution sur un système informatique, ordonne au système informatique d'effectuer un procédé selon l'une quelconque des revendications 4 à 6.
